# FASCICULE DE BREVET EUROPEEN

(11) **EP 0 493 284 B1**
(45) Date de publication et mention de la délivrance du brevet: **08.02.1995**
(21) Numéro de dépôt: 91440108.8
(22) Date de dépôt: 13.12.1991
(51) Int. Cl.: F15B 15/02, B60P 1/16

(54) **Actionneur d'articulation pour la mise en oeuvre de tous mouvements rectilignes ou rotatifs**
Schwenkbetätiger zum Ausführen aller geradlinigen oder rotierenden Bewegungen
Swivel actuator for all rectilinear or rotatory movements

(30) Priorité: 20.12.1990 FR 9016393
(43) Date de publication de la demande: 01.07.1992
(73) Titulaire: Diebolt, Rémy, F-67440 Marmoutier (FR)
(72) Inventeur: Diebolt, Rémy, F-67440 Marmoutier (FR)
(74) Mandataire: Nuss, Pierre

(56) Documents cités:
- DE-B- 1 220 747
- US-A- 4 235 421

## Description

La présente invention concerne le domaine des équipements pour la manutention en général, à savoir pour soulever, tourner, pousser et tirer, ainsi que pour la stabilisation d'engins de manutention ou de véhicules routiers ou autres, ou autres applications, et a pour objet un actionneur d'articulation pour la mise en oeuvre de tous mouvements rectilignes ou rotatifs.

Actuellement, les articulations des équipements de dispositifs de manutention, de véhicules routiers ou autres, à savoir les articulations entre les différents éléments repliables d'une flèche de grue, l'articulation des béquilles équipant certains véhicules routiers et/ou leur remorque ou semi-remorque ou autres, ou encore l'articulation d'un compas de basculement de benne ou analogue, ou tous mécanismes nécessitant un mouvement rotatif ou rectiligne, sont généralement réalisées au moyen de vérins disposés entre les éléments constituant l'articulation, par montage sous ou sur lesdits éléments.

Un tel mode de réalisation entraîne des efforts très importants sur lesdits éléments et un encombrement important de l'ensemble ainsi réalisé.

Il a été proposé d'obvier à cet inconvénient en disposant partiellement le vérin à l'intérieur d'au moins un élément de l'articulation, ce qui entraîne, toutefois, la nécessité de renforcer les parois latérales du caisson formant ledit élément.

En outre, une telle disposition du vérin sur la face inférieure ou supérieure de l'un au moins des éléments de l'articulation présente également l'inconvénient d'exposer ledit vérin à un risque de détérioration rapide, par choc ou par appui sur ou contre des corps étrangers, entraînant son remplacement fréquent et donc des frais de maintenance élevés.

Enfin, les vérins utilisés dans ces types d'articulations nécessitent généralement, du fait même de leur disposition dans l'articulation, un dimensionnement très important.

La présente invention a pour but de pallier ces inconvénients.

Elle a, en effet, pour objet un actionneur d'articulation agissant sur les deux éléments constitutifs d'une l'articulation, l'arbre d'articulation étant solidaire à ses extrémités d'un premier élément de l'articulation (voir par exemple DE-B-1 220 747), caractérisé en ce que le deuxième élément de l'articulation loge l'actionneur constitué par un vérin et par des chaînes ou des câbles guidés, d'une part, autour de l'arbre d'articulation et, d'autre part, autour de pignons ou de poulies ou roues à gorge logées dans ledit deuxième élément de l'articulation, le vérin étant fixé par au moins une extrémité aux chaînes ou câbles, l'autre extremité étant fixée éventuellement à l'arbre d'articulation, afin d'exercer une traction sur les chaînes ou câbles et un bras de levier sur l'arbre d'articulation pour entraîner ce dernier en rotation.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue partielle en élévation latérale et en coupe d'un actionneur d'articulation conforme à l'invention ;
les figures 2 et 3 sont des vues analogues à celle de la figure 1 représentant des variantes de réalisation de l'invention ;
la figure 4 est une vue partielle en élévation latérale représentant l'application d'un actionneur à une benne basculante ;
les figures 5 à 7 sont des vues analogues à celle de la figure 4, représentant des variantes de réalisation de l'actionnement d'une benne, et
les figures 8 et 9 sont des vues partielles en élévation latérale représentant l'actionnement d'une béquille.

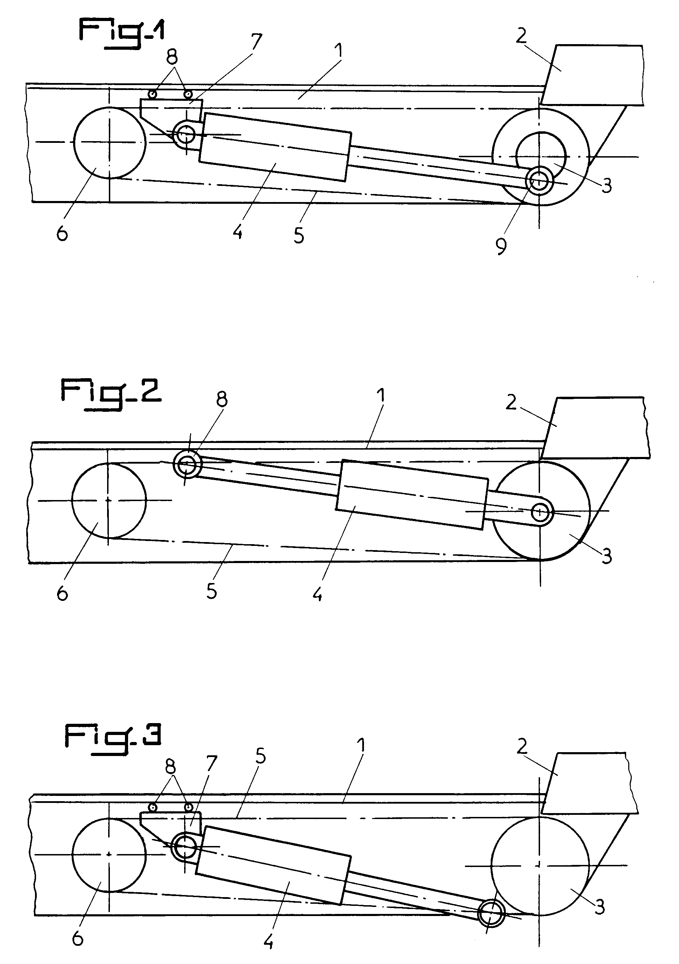

Conformément à l'invention, et comme le montrent plus particulièrement, à titre d'exemples non limitatifs, les figures 1 à 3 des dessins annexés, l'actionneur d'articulation agissant sur les éléments 1 et 2 constitutifs de l'articulation, l'arbre d'articulation 3 étant solidaire à ses extrémités d'un premier élément 1 ou 2 de l'articulation, est caractérisé en ce que le deuxième élément 2 ou 1 de l'articulation loge l'actionneur constitué par un vérin 4 et par des chaînes ou des câbles 5 guidés, d'une part, autour de l'arbre d'articulation 3 et, d'autre part, autour de pignons ou de poulies ou roues à gorge 6 logées dans ledit deuxième élément de l'articulation, le vérin 4 étant fixé par au moins une extrémité aux chaînes ou câbles 5, l'autre extrémité étant fixée éventuellement à l'arbre d'articulation 3, afin d'exercer une traction sur les chaînes ou câbles 5 et un bras de levier sur l'arbre d'articulation 3 pour entraîner ce dernier en rotation.

Selon un premier mode de réalisation de l'invention, représenté à la figure 1 des dessins annexés, le vérin 4 est relié par sa chape au moyen d'un chariot 7 aux chaînes ou câbles 5, ledit chariot 7 comportant des galets 8 de guidage sur la face intérieure correspondante de l'un des éléments 1 ou 2, ces galets 8 étant, soit guidés au-dessus du chariot 7, soit montés sur les axes de liaison dudit chariot 7 avec les maillons des chaînes ou avec les câbles 5, l'extrémité de la tige de piston du vérin 4 agissant sur un maneton excentrique 9 de l'arbre d'articulation 3. Ce mode de réalisation permet l'obtention d'une force de rotation importante, avec utilisation d'un vérin de diamètre relativement réduit comparativement à ce qui serait nécessaire pour un vérin d'actionnement des articulations connues, du fait de la réalisation d'un bras de levier sur l'arbre 3 et d'une traction exercée sur les chaînes ou câbles 5 également sur cet arbre 3.

La figure 2 représente un autre mode de réalisation de l'invention, dans lequel le vérin 4 est monté par sa chape sur l'arbre d'articulation 3 entre les éléments 1 et 2 et est relié par l'extrémité de sa tige de piston directement aux chaînes ou câbles 5, des galets 8 étant prévus au niveau de cette liaison et coopérant avec la paroi interne correspondante de l'élément 1 ou 2.

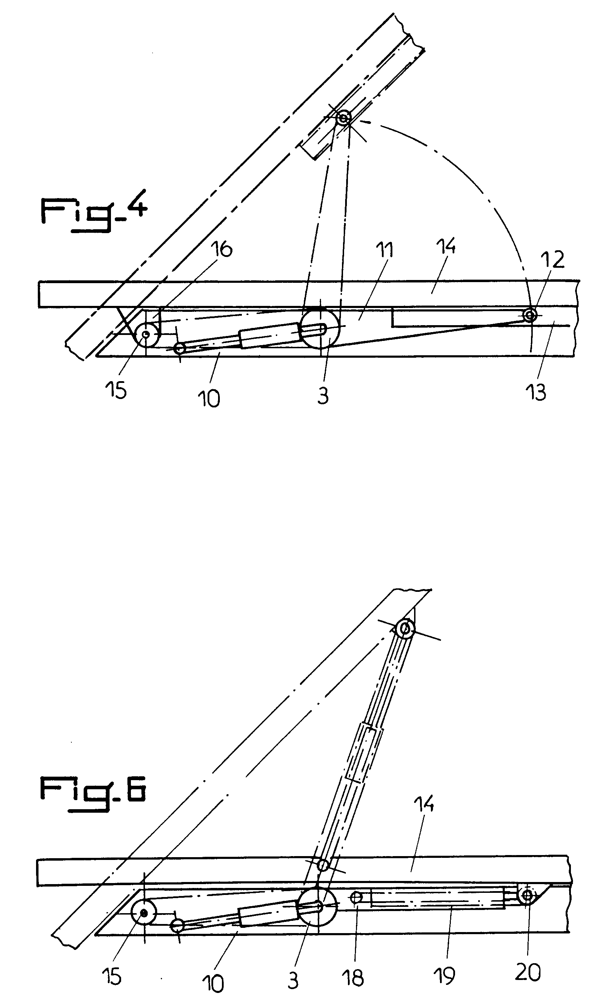

Selon une autre variante de réalisation de l'invention, représentée à la figure 3 des dessins annexés, le vérin 4 agit directement, par ses deux extrémités, sur les brins des chaînes ou câbles 5 avec guidage de ses éléments de liaison avec les chaînes ou câbles 5, par l'intermédiaire de galets, sur les parois internes correspondantes de l'élément 1 ou 2. Ainsi, le bras de levier est multiplié par deux, de sorte qu'il est possible d'obtenir un couple de rotation maximal sur l'arbre 3.

Les modes de réalisation d'un actionneur d'articulation suivant les figures 1 à 3 sont particulièrement adaptés au dépliage d'un ou de plusieurs bras articulés de grue, d'un mât de manutention, d'un bras articulé de support d'une nacelle, d'un mât de téléphérique ou analogues.

Bien entendu, dans un tel cas, il suffit simplement de prévoir autant d'actionneurs d'articulation qu'il existe d'arbres d'articulation.

Selon une autre variante de réalisation de l'invention, non représentée aux dessins annexés, l'actionneur d'articulation peut avantageusement être monté dans un coulisseau formant carter à insérer et à bloquer dans l'extrémité de l'un des éléments 1 ou 2, l'arbre d'articulation 3 formant partie intégrante de ce coulisseau, l'autre élément 2 ou 1 étant monté au moyen de flasques latéraux sur les extrémités de l'arbre 3 après insertion dudit coulisseau dans le premier élément 1 ou 2.

Un tel mode de réalisation permet de limiter l'usinage de l'élément de réception de l'actionneur à un minimum et de réaliser un montage et un préréglage de l'ensemble de l'actionneur avant insertion dans ledit élément.

Les figures 4 à 9 des dessins annexés représentent diverses utilisations possibles de l'actionneur conforme à l'invention. Ainsi, les figures 4 à 7 concernent des adaptations à des camions ou à des remorques munis de bennes basculantes ou de bennes amovibles.

Dans le mode de réalisation suivant la figure 4, l'un des éléments de l'articulation est constitué directement par le châssis 10 d'un camion ou d'une remorque et loge l'actionneur, l'autre élément d'articulation étant constitué par un bras 11 solidaire, à une extrémité, de l'arbre 3 de l'actionneur et muni, à son autre extrémité, d'un galet 12 guidé dans une glissière 13 solidaire du châssis 14 d'une benne.

Ainsi, lors d'un actionnement du vérin 4, le bras 11 est pivoté et appuie contre le châssis 14 de la benne par l'intermédiaire du galet 12. Au cours du mouvement de pivotement, qui a pour effet de déplacer le galet 12 par rapport au châssis 14 de la benne, ledit galet 12 est guidé dans la glissière 13, de sorte que le pivotement de ladite benne peut s'effectuer de manière continue et sans heurt.

Conformément à une autre caractéristique de l'invention, le bras 11 est avantageusement constitué par deux brins indépendants solidaires chacun d'une extrémité de l'arbre 3 de l'actionneur, chaque brin étant muni d'un galet 12 coopérant avec une glissière propre 13 solidaire d'un côté du châssis 14 de la benne. Grâce à un tel mode de réalisation, il est possible d'assurer simultanément une bonne rigidité transversale de la benne au niveau de la liaison de son châssis 14 avec l'actionneur.

Selon une autre caractéristique de l'invention, l'axe 15 de support des pignons ou poulies ou roues à gorge 6 peut également être solidarisé avec ces derniers et être relié à ses extrémités à des flasques 16 solidaires du châssis 14 de la benne pour former l'axe de pivotement de cette dernière. Grâce à ce mode de réalisation, l'actionnement en pivotement de la benne est réalise simultanément au niveau de son axe de pivotement et près de l'extrémité opposée à cet axe, de sorte que la puissance à développer nécessaire peut être notablement réduite.

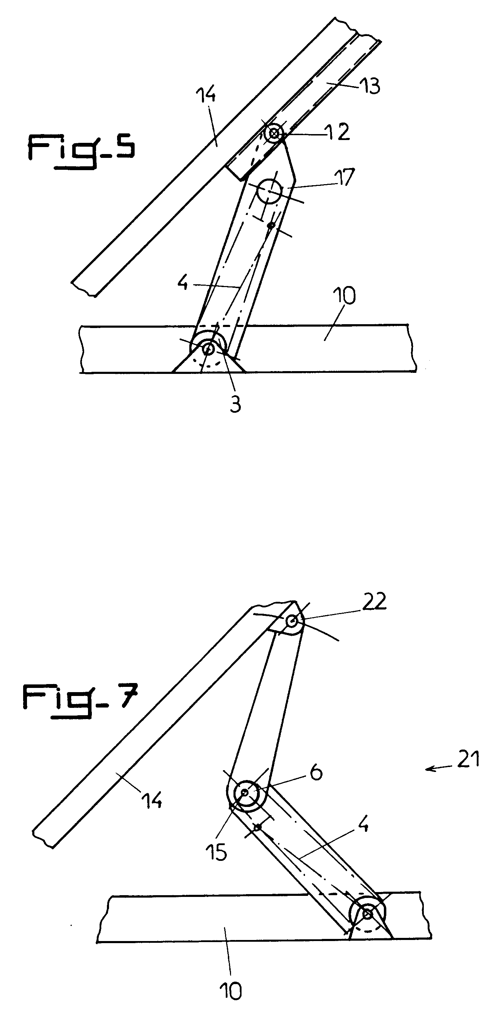

La figure 5 représente un autre mode de réalisation de l'actionnement en pivotement d'une benne, dans lequel l'actionneur d'articulation est intégré dans le bras 17 de basculement d'une benne, dont le châssis 14 s'appuie par l'intermédiaire de glissières 13 coopérant avec des galets 12 sur l'extrémité dudit bras 17 opposé à l'arbre d'articulation 3 de ce dernier sur le châssis 10 du camion ou de la remorque, ledit bras 17 se présentant avantageusement sous forme d'un bras double ou d'un caisson logeant l'actionneur d'articulation.

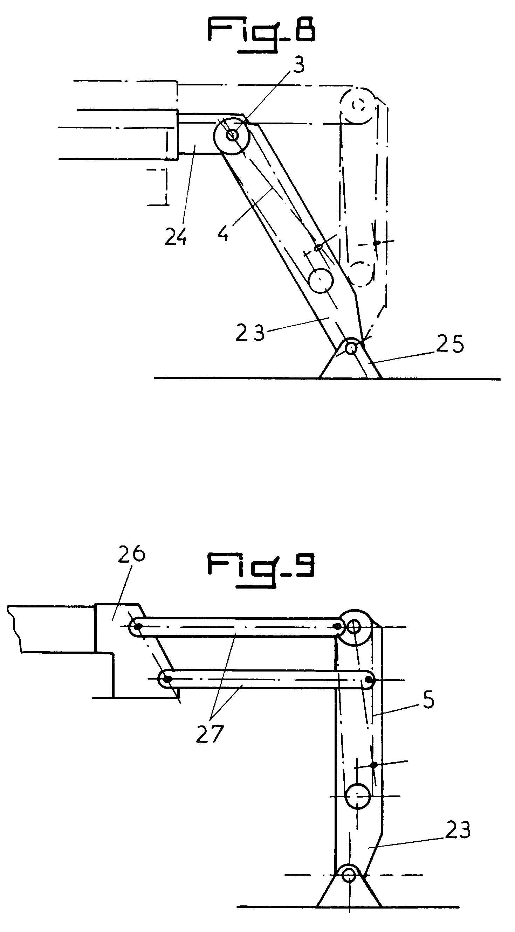

La figure 6 représente une autre variante de réalisation de l'invention, dans laquelle l'actionneur d'articulation est intégré à un châssis 10 d'un camion ou d'une remorque et est relié par son arbre 3 à un bras 18 logeant au moins un vérin télescopique 19, dont la tige de piston ou la chape est reliée à au moins un palier 20 du châssis 14 de la benne du côté opposé à l'axe d'articulation 15 de cette dernière sur le châssis 10.

Un tel mode de réalisation permet, d'une part, de remplacer les galets 12 et les glissières 13 et, d'autre part, de développer simultanément à la force de basculement une force de poussée favorisant le pivotement de la benne. Dans un tel cas, le dimensionnement des vérins 4 et 19 ou leur dispositif d'alimentation est calculé de telle manière que le vérin 4 agisse en priorité, la force du ou des vérins 19 ne se développant qu'après un laps de temps prédéterminé. Une commande différentielle des vérins peut notamment être obtenue, de manière connue, au moyen d'un temporisateur.

La figure 7 représente une autre variante de réalisation de l'invention, dans laquelle l'actionneur d'articulation est intégré dans l'un des bras d'un compas 21 de commande du basculement d'une benne, son arbre d'articulation 3 étant solidarisé avec le châssis 10 d'un camion ou d'une remorque et son axe 15 de support des pignons, poulies ou roues à gorge 6 formant l'arbre d'articulation du deuxième bras dudit compas, dont l'extrémité libre coopère avec un palier 22 du châssis 14 de la benne. Un tel compas 21 fonctionne de manière absolument identique à un compas classique connu.

Les figures 8 et 9 des dessins annexés représentent l'application de l'actionneur conforme à l'invention à des béquilles de stabilisation de véhicules ou d'engins de manutention, en particulier lors de manoeuvres de chargement ou de déchargement.

Comme le montre la figure 8, l'actionneur peut être intégré dans une béquille 23 avec possibilité de pivotement au moyen de son arbre 3 sur l'extrémité d'une traverse télescopique 24 d'un véhicule. Ainsi, lors de l'actionnement du vérin 4, la béquille pivote dans la position représentée en trait plein sur la figure 8, de manière à appuyer son sabot 25 sur le sol et à stabiliser le véhicule. Une stabilisation supplémentaire peut être obtenue par un actionnement complémentaire du vérin 4 ayant pour effet de pivoter la béquille 23 dans une position verticale, ce pivotement s'accompagnant d'une sortie télescopique de la traverse 24, comme représenté en pointillé sur la figure 8.

La figure 9 représente une variante de réalisation de la figure 8, dans laquelle la béquille 23 est montée sur le châssis 26 d'un véhicule, en parallélogramme par l'intermédiaire d'au moins une paire de bras parallèles 27 articulés, d'une part, sur le châssis 26 et, d'autre part, l'un directement sur les chaînes ou câbles 5 et l'autre sur la béquille 23.

Ainsi, en partant de la position représentée à la figure 9, lors d'un actionnement du verin 4, la béquille 23 se soulève d'abord, avec son sabot 25, du sol, puis pivote en direction du châssis 26 du véhicule, dans sa position repliée de non-utilisation.

Grâce à l'invention, il est possible de réaliser un actionneur d'articulation pour la mise en oeuvre de tous mouvements rectilignes ou rotatifs, utilisable en particulier pour des manoeuvres de pliage et de dépliage de bras de grues, de mâts de manutention, de bras de nacelles, de mâts de téléphériques ou analogues, ainsi que comme stabilisateur d'un engin ou pour le béguillage hydraulique d'un engin ou encore pour la manutention de caisses ou autres conteneurs montés sur des camions ou sur des remorques, ou pour tous mécanismes nécessitant un mouvement rotatif ou rectiligne.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention défini par les revendications.

## Revendications

1. Actionneur d'articulation agissant sur les deux éléments (1 et 2) constitutifs d'une d'articulation, l'arbre d'articulation (3) étant solidaire à ses extrémités d'un premier élément (1 ou 2) de l'articulation, caractérisé en ce que le deuxième élément (2 ou 1) de l'articulation loge l'actionneur constitué par un vérin (4) et par des chaînes ou des câbles (5) guidés, d'une part, autour de l'arbre d'articulation (3) et, d'autre part, autour de pignons ou de poulies ou roues à gorge (6) logées dans ledit deuxième élément de l'articulation, le vérin (4) étant fixé par au moins une extrémité aux chaînes ou câbles (5), l'autre extrémité étant fixée, éventuellement à l'arbre d'articulation (3), afin d'exercer une traction sur les chaînes ou câbles (5) et un bras de levier sur l'arbre d'articulation (3) pour entraîner ce dernier en rotation.

2. Actionneur d'articulation, suivant la revendication 1, caractérisé en ce que le vérin (4) est relié par sa chape au moyen d'un chariot (7) aux chaînes ou câbles (5), ledit chariot (7) comportant des galets (8) de guidage sur la face intérieure correspondante de l'un des éléments (1 ou 2), ces galets (8) étant, soit guidés au-dessus du chariot (7), soit montés sur les axes de liaison dudit chariot (7) avec les maillons des chaînes ou avec les câbles (5), l'extrémité de la tige de piston du vérin (4) agissant sur un maneton excentrique (9) de l'arbre d'articulation (3).

3. Actionneur d'articulation, suivant la revendication 1, caractérisé en ce que le vérin (4) est monté par sa chape sur l'arbre d'articulation (3) entre les éléments (1 et 2) et est relié par l'extrémité de sa tige de piston directement aux chaînes ou câbles (5), des galets (8) étant prévus au niveau de cette liaison et coopérant avec la paroi interne correspondante de l'élément (1 ou 2).

4. Actionneur d'articulation, suivant la revendication 1, caractérisé en ce que le vérin (4) agit directement, par ses deux extrémités, sur les brins des chaînes ou câbles (5) avec guidage de ses éléments de liaison avec les chaînes ou câbles (5), par l'intermédiaire de galets, sur les parois internes correspondantes de l'élément (1 ou 2).

5. Actionneur d'articulation, suivant l'une quelconque des revendications 1 à 4, caractérisé en ce qu'il est monté dans un coulisseau formant carter à insérer et à bloquer dans l'extrémité de l'un des éléments (1 ou 2), l'arbre d'articulation (3) formant partie intégrante de ce coulisseau, l'autre élément (2 ou 1) étant monté au moyen de flasques latéraux sur les extrémités de l'arbre d'articulation (3) après insertion dudit coulisseau dans le premier élément (1 ou 2).

6. Actionneur d'articulation, suivant la revendication 1, caractérisé en ce que l'un des éléments de l'articulation est constitué directement par le châssis (10) d'un camion ou d'une remorque et loge l'actionneur, l'autre élément d'articulation étant constitué par un bras (11) solidaire, à une extrémité, de l'arbre d'articulation (3) de l'actionneur et muni, à son autre extrémité, d'un galet (12) guidé dans une glissière (13) solidaire du châssis (14) d'une benne.

7. Actionneur d'articulation, suivant la revendication 6, caractérisé en ce que le bras (11) est avantageusement constitué par deux brins indépendants solidaires chacun d'une extrémité de l'arbre d'articulation (3) de l'actionneur, chaque brin étant muni d'un galet (12) coopérant avec une glissière propre (13) solidaire d'un côté du châssis (14) de la benne.

8. Actionneur d'articulation, suivant l'une quelconque des revendications 1, 6 et 7, caractérisé en ce que l'axe (15) de support des pignons ou poulies ou roues à gorge (6) est solidarisé avec ces derniers et est relié à ses extrémités à des flasques (16) solidaires du châssis (14) d'une benne pour former l'axe de pivotement de cette dernière.

9. Actionneur d'articulation, suivant l'une quelconque des revendications 1, 6 et 7, caractérisé en ce qu'il est intégré dans le bras (17) de basculement d'une benne, dont le châssis (14) s'appuie par l'intermédiaire de glissières (13) coopérant avec des galets (12) sur l'extrémité dudit bras (17) opposé à l'arbre d'articulation (3) de ce dernier sur le châssis (10) d'un camion ou d'une remorque, ledit bras (17) se présentant avantageusement sous forme d'un bras double ou d'un caisson logeant l'actionneur d'articulation.

10. Actionneur d'articulation, suivant la revendication 1, caractérisé en ce qu'il est intégré à un châssis (10) d'un camion ou d'une remorque et est relié par son arbre d'articulation (3) à un bras (18) logeant au moins un vérin télescopique (19) dont la tige de piston ou la chape est reliée à au moins un palier (20) du châssis (14) de la benne du côté opposé à l'axe d'articulation (15) de cette dernière sur le châssis (10).

11. Actionneur d'articulation, suivant la revendication 1, caractérisé en ce qu'il est intégré dans l'un des bras d'un compas (21) de commande du basculement d'une benne, son arbre d'articulation (3) étant solidarisé avec le châssis (10) d'un camion ou d'une remorque et son axe (15) de support des pignons, poulies ou roues à gorge (6) formant l'axe d'articulation du deuxième bras dudit compas, dont l'extrémité libre coopère avec un palier (22) du châssis (14) de la benne.

12. Actionneur d'articulation, suivant la revendication 1, caractérisé en ce qu'il est intégré dans une béquille (23) avec possibilité de pivotement au moyen de son arbre d'articulation (3) sur l'extrémité d'une traverse télescopique (24) d'un véhicule.

13. Actionneur d'articulation, suivant la revendication 12, caractérisé en ce que la béquille (23) est montée sur le châssis (26) d'un véhicule, en parallélogramme par l'intermédiaire d'au moins une paire de bras parallèles (27) articulés, d'une part, sur le châssis (26) et, d'autre part, l'un directement sur les chaînes ou câbles (5) et l'autre sur la béquille (23).

## Claims

1. A joint actuating means acting on the two elements (1 and 2) constituting a joint, the joint shaft (3) being rigidly connected at its ends to a first element (1 or 2) of the joint, characterised in that the second element (2 or 1) of the joint houses the actuating means constituted by a jack (4) and by chains or cables (5) guided on the one hand round the joint shaft (3) and on the other hand round pinions or pulleys or groove wheels (6) housed in the said second element of the joint, the jack (4) being fixed by at least one end to the chains or cables (5), the other end being optionally fixed to the joint shaft (3), in order to exert tension on the chains or cables (5) and a lever arm on the joint shaft (3) to drive the latter in rotation.

2. A joint actuating means according to Claim 1, characterised in that the jack (4) is connected by its fork by means of a carriage (7) to the chains or cables (5), the said carriage (7) having rollers (8) for guiding on the corresponding inner face of one of the elements (1 or 2), the rollers (8) being either guided above the carriage (7) or mounted on the pins for connecting the said carriage (7) to the links of the chains or to the cables (5), the end of the piston rod of the jack (4) acting on an eccentric crank pin (9) of the joint shaft (3).

3. A joint actuating means according to Claim 1, characterised in that the jack (4) is mounted by its fork on the joint shaft (3) between the elements (1 and 2) and is connected by the end of its piston rod directly to the chains or cables (5), rollers (8) being provided at this connection and co-operating with the corresponding inner wall of the element (1 or 2).

4. A joint actuating means according to Claim 1, characterised in that the jack (4) acts directly, by its two ends, on the runs of the chains or cables (5) with guiding of its elements for connection to the chains or cables (5), by way of rollers, on the corresponding inner walls of the element (1 or 2).

5. A joint actuating means according to any one of Claims 1 to 4, characterised in that it is mounted in a slide forming a casing to be inserted and locked in the end of one of the elements (1 or 2), the joint shaft (3) forming an integral part of the slide, the other element (2 or 1) being mounted by means of lateral flanges on the ends of the joint shaft (3) after insertion of the said slide in the first element (1 or 2).

6. A joint actuating means according to Claim 1, characterised in that one of the elements of the joint is constituted directly by the chassis (10) of a lorry or of a trailer and houses the actuating means, the other joint element being constituted by an arm (11) rigidly connected at one end to the joint shaft (3) of the actuating means and provided at its other end with a roller (12) guided in a slideway (13) rigidly connected to the frame (14) of a tipper body or skip.

7. A joint actuating means according to Claim 6, characterised in that the arm (11) is advantageously constituted by two independent members, each rigidly connected to an end of the joint shaft (3) of the actuating means, each member being provided with a roller (12) co-operating with its own slideway (13) rigidly connected to one side of the frame (14) of the tipper body or skip.

8. A joint actuating means according to any one of Claims 1, 6 and 7, characterised in that the support pin (15) for the pinions or pulleys or groove wheels (6) is rigidly connected to these latter and is connected at its ends to flanges (16) rigidly connected to the frame (14) of a tipper body or skip to form the pivot axis of the latter.

9. A joint actuating means according to any one of Claims 1, 6 and 7, characterised in that it is incorporated in the tilting arm (17) of a tipper body or skip, the frame (14) of which bears by way of slideways (13) co-operating with rollers (12) on the opposite end of the said arm (17) from the joint shaft (3) of the latter on the chassis (10) of a lorry or of a trailer, the said arm (17) being advantageously in the form of a double arm or of a shell housing the joint actuating means.

10. A joint actuating means according to Claim 1, characterised in that it is incorporated in a chassis (10) of a lorry or of a trailer and is connected by its joint shaft (3) to an arm (18) housing at least one telescopic jack (19), the piston rod or the fork of which is connected to at least one bearing (20) of the frame (14) of the tipper body or skip on the opposite side from the axis (15) of articulation of the latter on the chassis (10).

11. A joint actuating means according to Claim 1, characterised in that it is incorporated in one of the arms of a tilt control calliper (21) for a tipper body or skip, its joint shaft (3) being rigidly connected to the chassis (10) of a lorry or of a trailer and its pin (15) for supporting the pinions, pulleys or groove wheels (6) forming the articulation axis of the second arm of the said calliper, the free end of which co-operates with a bearing (22) of the frame (14) of the tipper body or skip.

12. A joint actuating means according to Claim 1, characterised in that it is incorporated in a strut (23) with the possibility of pivoting by means of its joint shaft (3) on the end of a telescopic cross-member (24) of a vehicle.

13. A joint actuating means according to Claim 12, characterised in that the strut (23) is mounted on the chassis (26) of a vehicle, in a parallelogram shape, by means of at least one pair of parallel arms (27) which are articulated on the one hand on the chassis (26) and, on the other hand, one directly on the chains or cables (5) and the other on the strut (23).

## Patentansprüche

1. Vorrichtung zum Betätigen eines aus zwei Elementen bestehenden Gelenks, wobei eine Gelenkwelle (3) mit einem ersten, das Gelenk bildenden Element (1 oder 2) fest verbunden ist, dadurch gekennzeichnet, daß das zweite, das Gelenk bildende Element (2 oder 1) die durch eine Kolben-Zylinder-Einheit (4) und durch Ketten oder Kabel (5) gebildete Vorrichtung aufnimmt, die Ketten oder Kabel (5) einerseits um die Gelenkwelle (3) und andererseits um Zahnräder, Seilrollen oder Rillenräder (6) geführt sind, die im zweiten, das Gelenk bildenden Element gelagert sind und die Kolben-Zylinder-Einheit (4) wenigstens mit ihrem einen Ende an den Ketten oder Kabeln (5) befestigt ist, während das andere Ende gegebenenfalls an der Gelenkwelle (3) befestigt ist, um auf die Ketten oder Kabel (5) eine Zugkraft auszuüben und auf einen Hebelarm an der Gelenkwelle (3) zu wirken und dieser eine Drehbewegung zu erteilen.

2. Vorrichtung zum Betätigen eines Gelenks gemäß Anspruch 1, dadurch gekennzeichnet, daß die Kolben-Zylinder-Einheit (4) mit ihrem Gabelgelenk mittels eines Schlittens (7) mit den Ketten oder Kabeln (5) verbunden ist, der Schlitten (7) Führungsrollen (8) zur Führung auf der entsprechenden Innenseite eines der Elemente (1 oder 2) aufweist und diese Führungsrollen (8) entweder oberhalb des Schlittens (7) geführt sind oder auf dem Verbindungszapfen des Schlittens (7) mit den Kettengliedern oder mit den Kabeln (5) angeordnet sind, und das Ende der Kolbenstange der Kolben-Zylinder-Einheit (4) auf einen exzentrischen Zapfen (9) der Gelenkwelle (3) wirkt.

3. Vorrichtung zum Betätigen eines Gelenks nach Anspruch 1, dadurch gekennzeichnet, daß die Kolben-Zylinder-Einheit (4) mit ihrem Gabelgelenk an der Gelenkwelle (3) zwischen den Elementen (1 und 2) gelagert ist und mit dem Ende ihrer Kolbenstange direkt mit den Ketten oder Kabeln (5) verbunden ist, wobei Rollen (8) im Bereich dieser Verbindung vorgesehen sind, die mit der entsprechenden Innenwand des Elements (1 oder 2) zusammenwirken.

4. Vorrichtung zum Betätigen eines Gelenks nach Anspruch 1, dadurch gekennzeichnet, daß die Kolben-Zylinder-Einheit (4) direkt mittels ihrer beiden Enden auf die Ketten- oder Kabelstränge (5) wirkt, wobei ihre Verbindungselemente mit den Ketten oder Kabeln (5) unter Zwischenschaltung von Rollen auf den entsprechenden Innenwänden des Elements (1) oder (2) geführt sind.

5. Vorrichtung zum Betätigen eines Gelenks nach einem der Ansprüche 1 bis 4, dadurch gekennzeichnet, daß sie in einem ein Gehäuse bildenden Gleitschuh angeordnet ist, der sich in das Ende eines der Elemente (1 oder 2) einsetzen und festlegen läßt, wobei die Gelenkwelle (3) mit dem Gleitschuh eine Einheit bildet, während das andere Element (2 oder 1) nach Einsetzen des Gleitschuhs in das erste Element (1 oder 2) mittels seitlicher Wangen auf den Enden der Gelenkwelle (3) ruht.

6. Vorrichtung zum Betätigen eines Gelenks nach Anspruch 1, dadurch gekennzeichnet, daß eines der das Gelenk bildenden Elemente aus dem Fahrgestell (10) eines Lastkraftwagens oder eines Anhängers besteht und die Betätigungsvorrichtung aufnimmt, während das andere das Gelenk bildende Element aus einem Arm (11) besteht, dessen eines Ende an der Gelenkwelle (3) befestigt ist und der an seinem anderen Ende eine Rolle (12) aufweist, die in einer an einem Rahmen (14) eines Kippaufbaus befestigten Gleitführung (13) geführt ist.

7. Vorrichtung zum Betätigen eines Gelenks nach Anspruch 6, dadurch gekennzeichnet, daß der Arm (11) vorteilhafterweise aus zwei unabhängigen Hebeln besteht, die jeder mit einem Ende der Gelenkwelle (3) der Vorrichtung verbunden sind, wobei jeder Hebel eine Rolle (12) aufweist, die mit einer eigenen Gleitführung (13) zusammenwirkt, die jeweils mit einer Seite des Rahmens (14) des Kippaufbaus verbunden ist.

8. Vorrichtung zum Betätigen eines Gelenks nach einem der Ansprüche 1, 6 und 7, dadurch gekennzeichnet, daß die Tragachse (15) der Zahnräder oder Seilscheiben oder Rillenräder (6) mit diesen fest verbunden ist und mit ihren Enden am Rahmen (14) eines Kippaufbaus befestigten Wangen (16) verbunden ist, um auf diese Weise die Schwenkachse des Kippaufbaus zu bilden.

9. Vorrichtung zum Betätigen eines Gelenks nach einem der Ansprüche 1, 6 und 7, dadurch gekennzeichnet, daß sie Teil eines Kipparms (17) eines Kippaufbaus ist, dessen Rahmen (14) sich unter Zwischenschaltung von Gleitführungen (13), die mit Rollen (12) zusammenwirken, auf dem Ende des Kipparms (17) abstützt, das entgegengesetzt zur Schwenkwelle (3) am Rahmen (10) eines Lastkraftwagens oder eines Anhängers liegt, wobei der Kipparm (17) vorteilhafterweise als Doppelarm oder kastenförmig ausgebildet ist und die Vorrichtung zum Betätigen des Gelenks aufnimmt.

10. Vorrichtung zum Betätigen eines Gelenks nach Anspruch 1, dadurch gekennzeichnet, daß sie Teil eines Rahmens (10) eines Lastkraftwagens oder eines Anhängers ist und mit ihrer Gelenkwelle (3) mit einem Hebel (18) verbunden ist, in dem wenigstens eine Teleskop-Kolben-Zylinder-Einheit (19) angeordnet ist, deren Kolbenstange oder Gabelgelenk mit wenigstens einem Lager (20) des Rahmens (14) des Kippaufbaus an der zur Schwenkachse (15) am Fahrgestell (10) entgegengesetzten Seite befestigt ist.

11. Vorrichtung zum Betätigen eines Gelenks nach Anspruch 1, dadurch gekennzeichnet, daß sie in einem der Arme einer Scherenbetätigung (21) zum Kippen eines Kippaufbaus angeordnet ist, wobei ihre Gelenkwelle (3) am Fahrgestell (10) eines Lastkraftwagens oder eines Anhängers befestigt ist, während ihre Achse (15) für die Zahnräder, Seilrollen oder Rillenräder (6) die Schwenkachse des zweiten Arms der Scherenbetätigung bildet, dessen freies Ende mit einem Lager (22) des Rahmens (14) des Kippaufbaus zusammenwirkt.

12. Vorrichtung zum Betätigen eines Gelenks nach Anspruch 1, dadurch gekennzeichnet, daß sie in einer Stütze (23) angeordnet ist, die sich mittels ihrer Gelenkwelle (3) um das Ende einer Teleskoptraverse (24) eines Fahrzeugs schwenken läßt.

13. Vorrichtung zum Betätigen eines Gelenks nach Anspruch 12, dadurch gekennzeichnet, daß die Stütze (23) am Rahmen (26) parallelogrammartig mittels wenigstens eines Paares von parallelen Lenkern (27) angeordnet ist, die einerseits am Rahmen (26) angelenkt sind und andererseits einer direkt an den Ketten oder Kabeln (5) und der andere an der Stütze (23) angelenkt ist.
